# FASCICULE DE BREVET EUROPEEN

(11) **EP 2 028 443 B1**
(45) Date de publication et mention de la délivrance du brevet: **14.07.2010**
(21) Numéro de dépôt: 08013895.1
(22) Date de dépôt: 04.08.2008
(51) Int. Cl.: G01C 21/26, G08G 1/0968

(54) **Procédé de détermination des zones de dépassement en milieu rural**
Verfahren zur Bestimmung der Überholgebiete im ländlichen Raum
Method for determining passing zones in rural areas

(30) Priorité: 24.08.2007 FR 0757173
(43) Date de publication de la demande: 25.02.2009
(73) Titulaire: Viamichelin, 92100 Boulogne Billancourt (FR)
(72) Inventeur: Raynaud, Michel, 94120 Fontenay sous Bois (FR)
(74) Mandataire: Bauvir, Jacques

(56) Documents cités:
- EP-A- 1 591 754
- FR-A- 2 847 703
- US-A1- 2003 033 082

## Description

La présente invention concerne tout d'abord un procédé de détermination de zones de dépassement, pour système de réseau routier numérique permettant de compléter les attributs des données numériques disponibles.

La majeure partie des tronçons autoroutiers ou de voies rapides sans carrefours à niveau remplissent les conditions requises pour effectuer dans des conditions satisfaisantes de sécurité et d'efficacité la plupart des dépassements nécessaires et/ou souhaités par la plupart des usagers de la route. Ainsi, sur les cartes routières et dans les bases de données de systèmes de cartographie numérique, ces tronçons sont aisément repérables comme des zones de dépassements potentielles. Ces zones ne sont cependant pas les plus utiles à identifier pour un usager de la route qui sait par habitude qu'il peut doubler sans difficulté tant sur les autoroutes que sur les voies rapides (abstraction faite des éventuels problèmes dus à un trafic intense, voire en cas de congestion).

La plupart du temps, les zones les plus utiles à connaître sont celles qui sont situées dans des zones rurales, lors de parcours effectués sur des routes ordinaires afin par exemple de doubler un véhicule lent tel un tracteur, un camion, un véhicule de service, etc, ou de s'extraire d'un convoi circulant à faible vitesse. Les données correspondant aux zones de dépassement sont toutefois absentes des informations contenues dans les bases de données routières. Ainsi, les systèmes de guidage utilisant ces données, qu'ils soient embarqués ou portables, ne peuvent pas fournir d'indications à l'usager sur ce sujet.

En France, sur la route, ces zones sont souvent pré-annoncées quelques kilomètres à l'avance par des panneaux du type c29a, et par le panonceau de distance M1 précisant la distance à laquelle se trouve la zone de dépassement : ces indications sont normalement prévues en France quatre kilomètres à l'avance, avec répétition tous les kilomètres.

Ainsi, si une zone de dépassement est située à une distance nettement supérieure à celle des panneaux de pré-indication, un usager peut se retrouver dans une situation difficile et/ou stressante, sans savoir si et quand il pourra doubler en toute sécurité.

Le document FR2847703 décrit un système d'informations pour informer un conducteur de véhicule et lui donner les propriétés des segments de trajets d'un trajet, ces segments étant situés à partir de l'emplacement du véhicule, en amont du véhicule, dans son sens de circulation. Le système comprend des moyens pour déterminer l'emplacement du véhicule, des moyens pour déterminer les segments de trajets qui se situent à partir de l'emplacement du véhicule et dans le sens de circulation du véhicule en amont de celui-ci. Les propriétés des segments comprennent les manoeuvres de dépassement. Le système comporte par ailleurs des moyens pour déterminer les distances entre l'emplacement du véhicule et les segments de trajets avec les propriétés concernant les manoeuvres de dépassement Ainsi, le conducteur peut organiser suffisamment à temps des manoeuvres de dépassement ou, connaissant la distance jusqu'à la possibilité de dépassement favorable suivante, il peut choisir de renoncer à une manoeuvre de dépassement éventuellement risquée.

Le document US2003033082 décrit un dispositif et un procédé permettant de guider un véhicule, d'identifier sa position en temps réel, de détecter les éventuelles zones de dépassament à venir, d'indiquer la distance restante entre la position du véhicule et la prochaine zone de dépassement, ainsi que le temps nécessaire pour effectuer le dépassement en fonction des conditions de conduite du véhicule et de la zone à franchir.

Toutefois, aucun de ces documents n'explique comment déterminer, à partir d'une base de données routières muette quant aux caractéristiques liées aux zones de dépassements, comment détecter ces zones, créer les données correspondant à ces zones et enrichir une base de données avec ces données.

Enfin, le document EP1591754 décrit un dispositif de guidage permettant de donner au conducteur diverses informations utiles pour effectuer des dépassements. Ces informations sont basées sur les caractéritiques physiques de la route suivie, mais aussi sur d'autres caractéristiques, telles que les données relatives au véhicule qui précède, la météo, les conditions du revêtement, etc.

Pour éviter de se retrouver dans un tel contexte, pour améliorer la sécurité routière, et pour élargir l'éventail des informations de navigation fournies aux usagers par les systèmes de navigation pour véhicules, l'objet de l'invention consiste à reconstituer une information non présente dans les bases de données routières existantes, à savoir l'existence et la position de certaines zones dépassement respectant certains critères.

Pour ce faire, l'invention prévoit un procédé de détermination de zones de dépassement pour système de réseau routier numérique stocké sur un support mémoire et comportant une pluralité d'éléments de réseau tels que des noeuds et/ou de tronçons et d'indications de positionnement de ces noeuds et/ou tronçons, lesdits éléments étant susceptibles d'une part d'être agencés dans une reconstitution d'un réseau routier de façon à former des portions de routes et des carrefours, et d'autre part de permettre de déterminer, à l'aide de moyens de traitement de données, au moins un itinéraire potentiel, susceptible de relier un point de départ D, et un point d'arrivée A;
lesdits éléments de réseau comportant par ailleurs les attributs permettant de classer les tronçons au moins en fonction des critères suivants :
- situation en milieu urbain (situé dans une agglomération) ou rural (hors agglomération);
- longueur du tronçon ;
- type de route :
   a. autoroute : voie à double chaussée (les 2 sens de circulation sont séparés par une limite physique), sans carrefours 'à niveau' et dont les chaussées répondent aux normes autoroutières,
   b. voie rapide : voie à double chaussée, sans carrefours à niveau, ne répondant pas aux normes autoroutières,
   c. voie à double-chaussée ordinaire : avec carrefours à niveau ;
   d. voie ordinaire : à simple chaussée, avec carrefours à niveau ou pas,
   e. bretelles
   f. ronds-points
- vitesse maximum légale autorisée sur le tronçon ;
- niveau d'importance du tronçon ;
dans lequel au moins une portion desdits éléments de réseau sont traités numériquement à l'aide de moyens de traitement de données, ledit traitement consistant à passer en revue chacun des tronçons et des attributs correspondants afin d'identifier chaque tronçon correspondant à la fois à :
a. une zone de route à double chaussée (type « c » ci-dessus);
b. située en environnement rural ;
c. d'une longueur continue (sans interruption par un réseau de niveau d'importance significative) supérieure à un seuil donné (ce seuil peut être fixe, par exemple de 350 m et de préférence supérieure à 500 m, ou paramétrable, par exemple en fonction du type de véhicule ou en fonction d'une distance fournie par l'utilisateur lui-même);
d. possédant une vitesse maximale autorisée plus élevée que celle applicable, par défaut, aux routes ordinaires (type « d » ci-dessus), (en France, cette vitesse devrait être supérieure à 90 km/h : le plus souvent, elle est de 110 km/h, puisque la limite de 130km/h est réservée aux autoroutes) ;
e. avec un niveau d'importance suffisant (selon un mode de réalisation avantageux, les niveaux d'importance utilisés dans le présent exemple sont les niveaux allant de 0 à 3 inclusivement. Selon diverses variantes de réalisation, les niveaux considérés sont plus ou moins nombreux, en fonction des résultats recherchés et du niveau de couverture souhaité).
f. lesdits tronçons n'étant par ailleurs pas sur une autoroute ou sur une voie rapide ;
de façon à affecter un attribut de zone de dépassement à chaque tronçon correspondant à l'ensemble de ces critères.

Ces conditions permettent à l'usager d'envisager la possibilité d'un dépassement sans enfreindre les règles du code de la route et sans prendre de risques.

Selon un mode de réalisation avantageux, on stocke les données finales obtenues en les liant aux tronçons de route correspondants de façon à ce que le système numérique comporte les données finales relatives aux zones de dépassement.

Ne sont pas retenues comme zone de dépassement, par choix, les portions de route en environnement urbain, qu'elles soient à double chaussée ou non : on considère que la densité de la circulation et les limitations de vitesse en environnement urbain rendent problématiques les dépassements : il s'agit plus d'une progression sur plusieurs files que de dépassements.

Par ailleurs, le cas des autoroutes et des voies rapides est également exclu puisque ces cas correspondent d'office à des zones de dépassement.

Dans le cas où la longueur minimum est paramétrable, le résultat prend avantageusement la forme non pas d'un attribut sur chaque tronçon mais d'une liste des zones comprenant leur longueur et les tronçons qui la composent. Les dispositifs et procédé de guidage utilisant ultérieurement ces données et attributs peuvent donc, en fonction du paramétrage, retenir les zones qui satisfont à ce minimum.

Selon un mode de réalisation avantageux du procédé de détermination de zones de dépassement pour système de réseau routier numérique, lesdits éléments de réseau comportent par ailleurs les attributs additionnels suivants permettant de classer les tronçons: nom de route, nom de rue, numéros de début / fin, et dans un tel cas, pour tout tronçon routier portant seulement un nom de rue et présentant des numéros d'adresses à ses extrémités, aucun attribut de zone de dépassement n'est affecté.

On exclut de la sorte les tronçons ne portant pas de nom de route. En particulier, les rues et les routes de faibles niveaux d'importance, qui ne sont pas appropriées pour effectuer des dépassements, sont exclues.

On retrouve deux principaux types d'utilisation du procédé de détection de zones de dépassement selon l'invention. Tout d'abord, de façon préférentielle, l'ensemble des éléments traités comprend une zone géographique déterminée, dont les données sont traitées afin d'y inclure les attributs relatifs aux zones de dépassement, les données résultantes étant sauvegardées pour utilisation ultérieure, par exemple avec un système ou dispositif de navigation ou de guidage pour véhicule.

Selon ce mode de réalisation préférentiel, on traite avantageusement l'ensemble des données d'une base de données, en une seule ou plusieurs fois, et on sauvegarde le nouveau résultat avec les données améliorées comportant les indications de zones de dépassement.

Les gains en temps sont important puisque le prétraitement des donnés n'est effectué qu'une seule fois. On peut alors utiliser des moyens de traitement, tels que processeurs, mémoires vives, etc, adéquatement dimensionnés pour traiter une base de données comprenant une quantité très importante de données, ce qui est le cas lorsque l'on considère des zones géographiques telles que des pays ou des groupes de pays formant des ensembles comme par exemple l'Union Européenne. Par la suite, on peut réutiliser de multiples fois ces nouvelles données, soit pour établir un itinéraire, mais plus particulièrement pour améliorer la qualité du guidage et élargir le spectre des informations fournies à l'utilisateur lorsqu'il est sur la route. Ainsi, une fois le traitement des données effectué, il devient possible d'utiliser les données résultantes afin de fournir des informations sur la prochaine zone de dépassement à venir, et éventuellement la longueur restant à parcourir lorsqu'on se trouve sur une de ces zones.

A titre de variante, on peut prévoir une utilisation dans laquelle l'ensemble des éléments traités correspond sensiblement aux tronçons compris dans un itinéraire donné. Après avoir établi un itinéraire ou à partir d'un itinéraire provenant d'une source externe, on effectue de préférence un calcul uniquement des tronçons correspondant à l'itinéraire à suivre. On ne conserve alors les données correspondant aux zones de dépassement de cet itinéraire que pour le temps du parcours. C'est un mode alternatif qui s'avère particulièrement intéressant par exemple dans le cas du paramétrage de la distance de dépassement préalablement évoqué, et dans la mesure où le calcul va concerner un nombre limité de tronçons routiers : ceux qui composent l'itinéraire. Ce calcul peut être réalisé dans un temps relativement succinct, même par un processeur de faible puissance.

Selon un autre mode de réalisation avantageux du procédé de détermination de zones de dépassement pour système de réseau routier numérique selon l'invention, un attribut de zone de dépassement n'est pas affecté à tout tronçon comportant un tronçon sécant (ou connexe) entrant ou à double sens dont le niveau d'importance est sensiblement égal ou supérieur à celui du tronçon analysé si la distance qui précède l'intersection ne vérifie pas la condition d'éligibilité.

En effet, pour vérifier la continuité d'une zone ou tronçon, un des paramètres à considérer consiste à prendre en compte l'effet éventuel des routes ou tronçons sécants. Pour valider l'impact d'une route sécante, il est avantageux de pouvoir vérifier son niveau d'importance pour juger de la longueur continue (c'est-à-dire sans interruption) de la zone de dépassement. Ainsi, si une route d'importance similaire croise une route cible comportant une zone de dépassement, cette dernière est interrompue sur une certaine distance avant et après le croisement. On se retrouve ainsi avec deux zones de dépassement séparées par la route sécante. Si une route d'importance moindre croise une zone de dépassement, cette dernière n'est pas affectée. Les tronçons en sens unique qui sortent (selon le sens de parcours autorisé) du réseau en cours d'étude ne sont pas gênants et peuvent donc ne pas être pris en considération.

Tel qu'évoqué précédemment, les données enrichies des informations relatives aux zones de dépassement sont avantageusement réutilisées par des dispositifs tels que des systèmes de navigation et/ou avec des procédés de guidage ou de navigation.

Ainsi l'invention prévoit un dispositif de guidage pour véhicule routier, permettant de fournir à un utilisateur des informations visuelles de guidage le long d'un itinéraire donné entre un point de départ D et un point d'arrivée A comportant une pluralité de points d'instruction PI auxquelles sont associées des instructions de guidage, ledit dispositif comportant au moins un processeur, susceptible de calculer au moins une portion d'itinéraire, des instructions de mise en oeuvre, un moyen de géolocalisation, permettant de fournir en temps réel des informations sur la position du véhicule à guider le long dudit itinéraire, un accès à un moyen d'affichage, permettant de fournir une représentation visuelle d'au moins une portion d'itinéraire ainsi que ladite position du véhicule guidé le long de cet itinéraire, un accès à une base de données contenant une pluralité d'éléments de réseau représentatifs d'un réseau routier et les données relatives aux zones de dépassement de ce réseau au moins pour une zone géographique donnée, lesdites données de dépassement ayant été préalablement obtenues par le procédé préalablement décrit, et dans lequel ledit processeur et les instructions de mise en oeuvre permettent de fournir à l'utilisateur des indications sur au moins une éventuelle zone de dépassement.

L'invention prévoit enfin un logiciel comprenant des éléments de code programmés pour la mise en oeuvre du procédé préalablement évoqué, lorsque ledit logiciel est chargé dans un système informatique et exécuté par ledit système informatique.

Selon un mode de réalisation avantageux, le logiciel se présente sous forme de produit enregistré sur un support lisible par un système informatique, comprenant des éléments de code programmés.

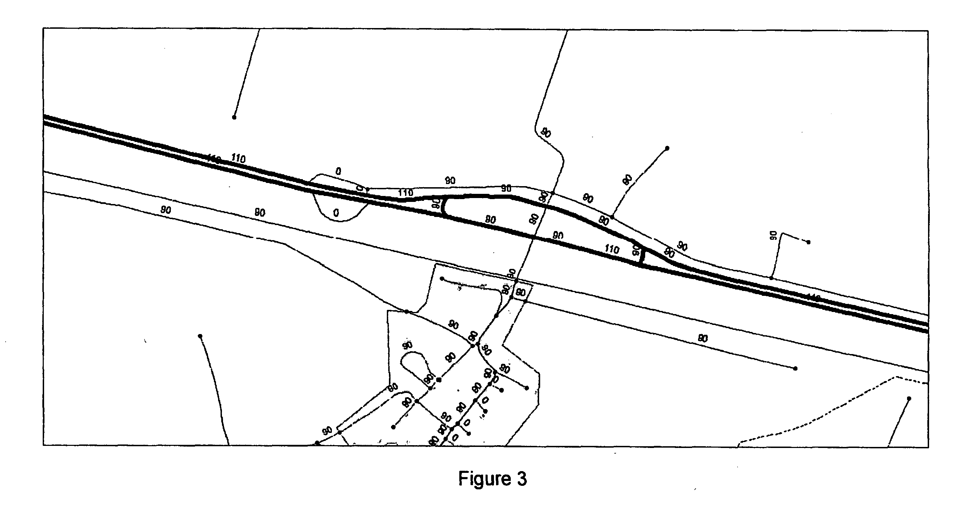

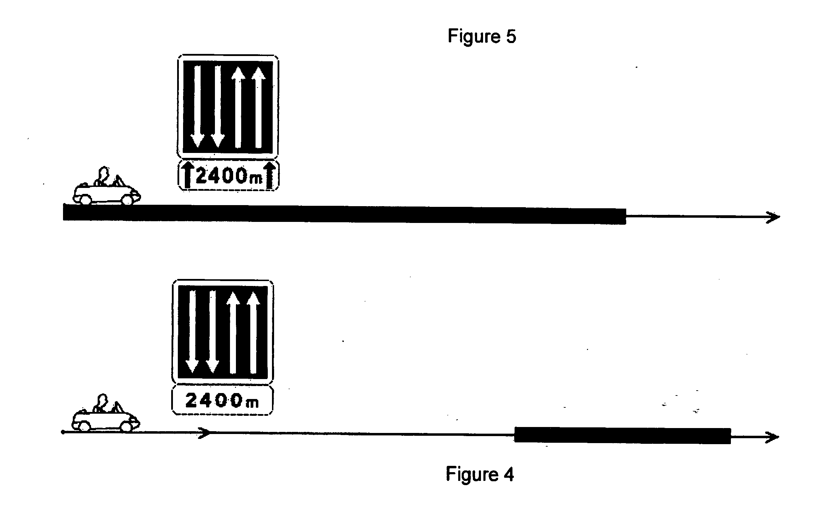

Tous les détails de réalisation sont donnés dans la description qui suit, complétée par les figures 1 à 5 dans lesquelles:

-les figures 1 et 2 représentent les panneaux de signalisation routière que l'on retrouve notamment en France pour indiquer l'arrivée prochaine d'une zone de dépassement (figure 1, panneau C29a) et la distance à parcourir avant le début de cette zone (figure 2, panneau M1) ;

-la figure 3 illustre une représentation schématique d'un cas où une zone de dépassement ne peut pas être attribuée, du fait d'une interruption causée par une route sécante ;

-la figure 4 illustre schématiquement un exemple dans lequel un véhicule se dirige vers une zone de dépassement connue : lorsque le véhicule atteint un seuil préétabli avant la zone en question, le procédé prévoit une étape d'alerte permettant d'informer l'usager de la présence d'une telle zone à une distance donnée ;

-la figure 5 illustre schématiquement un exemple dans lequel un véhicule se trouve dans une zone de dépassement connue : lorsque le véhicule atteint un seuil préétabli avant la fin de la zone en question, le procédé prévoit une étape d'alerte permettant d'informer l'usager du fait qu'il approche de la fin de la zone de dépassement.

Dans la présente description, les termes suivants sont utilisés notamment avec les significations suivantes :

On désigne « noeud » un point d'intersection entre un premier élément de réseau cartographique ou routier (ou autre réseau) et un second élément d'un tel réseau, notamment l'intersection entre une pluralité de voies routières. Un noeud désigne également un point de changement physique ou qualitatif d'un tronçon, comme par exemple un passage de deux à trois voies, un changement de la limitation de vitesse, une zone (même temporaire) faisant l'objet de travaux, un point de rupture tel une frontière, etc.

On désigne « tronçon » une portion de voie entre deux noeuds.

On désigne « carrefour » une intersection de plusieurs routes au même niveau.

On désigne un « itinéraire » un sous-ensemble de points issus des éléments de modélisation d'un réseau routier, créant un lien entre des données de façon à leur permettre de modéliser ou représenter un trajet ou parcours sur ledit réseau routier permettant de relier un point de départ et un point d'arrivée. Ce sous-ensemble est constitué par les données relatives aux tronçons permettant de relier le départ et l'arrivée. Par données relatives aux tronçons, on entend les identifications, les longueurs des tronçons et les coordonnées spatiales.

Ce sous-ensemble peut servir à représenter ledit itinéraire sous différentes formes, par exemple au moyen d'une représentation graphique, de préférence sous la forme d'une carte comprenant le point de départ, le point d'arrivée, et les tronçons formant ledit itinéraire, ou sous la forme d'une « feuille de route » ou liste d'instructions, comportant une énumération ou suite d'instructions écrites ou représentées par des pictogrammes, expliquant à un éventuel conducteur d'un véhicule, les différentes étapes à suivre pour effectuer ledit itinéraire.

On désigne « autoroute » une voie à double chaussée dans laquelle les deux sens de circulation sont séparés par une limite physique ou matérielle, sans carrefours à niveau et dont les chaussées répondent aux normes autoroutières.

On désigne « voie rapide » une voie à double chaussée, dans laquelle les deux sens de circulation sont séparés par une limite physique ou matérielle, ne comportant pas de carrefours à niveau et ne répondant pas aux normes autoroutières.

On désigne « voie à double-chaussée ordinaire » une voie comportant des carrefours à niveau, et dont les deux sens de circulation ne sont pas nécessairement séparés.

On désigne « voie ordinaire à simple chaussée » une voie comportant ou non des carrefours à niveau, et dont les deux sens de circulation ne sont pas séparés par une limite physique ou matérielle.

On désigne « niveaux d'importance » les différents niveaux d'une échelle de classification des tronçons permettant de traiter, de trier et/ou de regrouper certains tronçons par ensemble similaires, en se basant sur la «taille» de la route sur laquelle se trouve le tronçon. On peut par exemple avoir une échelle d'importance 0 à 6, correspondant par exemple à :
0 = Route internationale (Europe) ou / routes nationales du réseau majeur ;
1 = Autres routes nationales / routes inter-régions importantes ;
2 = Autres routes inter-régions / Routes importantes à l'intérieur d'une même région ;
3 = Autres routes à l'intérieur d'une même région / routes de liaisons entre villes ;
4 = Autres routes départementales / routes de liaisons entre les quartiers ;
5 = Réseau local ;
6 = Réseau local d'importance mineure.

On désigne « milieu urbain » une zone géographique située dans une agglomération.

On désigne « milieu rural » une zone géographique située hors agglomération.

On désigne « système de navigation » ou « système de guidage » un dispositif comportant un seul ou plusieurs éléments matériels tels qu'un processeur, des accès à des moyens mémoire ou une base de données et permettant, de fournir à un utilisateur les indications de guidage ou de conduite nécessaires permettant à ce dernier de circuler avec son véhicule et d'accomplir un itinéraire souhaité en suivant les instructions de guidage fournies par ledit système. Un système de navigation est en général doté des moyens processeurs lui permettant de déterminer un itinéraire entre un point de départ D et un point d'arrivée A. Un « PND » pour « Portable Navigation Device », en français « Assistant de Navigation Personnel » est un bon exemple de dispositif de navigation.

On désigne « système ou dispositif de géolocalisation ou de positionnement » un dispositif permettant de recevoir une ou plusieurs informations qui permettent directement ou par calcul de déterminer avec précision la position du dispositif selon des coordonnées de latitude/longitude ou cartésiennes. Le plus connu de ces systèmes est le système « GPS », de l'anglais « Global Positioning System » ou système de positionnement mondial. Ce système fonctionne avec un ensemble de satellites fournissant aux récepteurs des informations permettant le calcul (par trilatération) de leurs propres coordonnées. Le GPS est classiquement utilisé pour localiser des véhicules roulants, des avions, des navires, etc.

Afin de procéder au traitement de données qui permettra d'obtenir les attributs relatifs aux zones de dépassement, on retient les données qui comprennent, pour la zone géographique concernée :

-tous les tronçons de route à double chaussée en environnement rural qui ne sont ni des autoroutes ni des voies rapides, et qui sont d'un niveau d'importance suffisant ;

-tous les tronçons de route d'un niveau d'importance suffisant qui sont connexes à ce sous-réseau, c'est-à-dire tous les tronçons qui arrivent sur ou qui partent de ce sous-réseau ;

-les vitesses limites autorisées sur le réseau routier ordinaire.

Selon un mode de réalisation avantageux, les niveaux d'importance utilisés dans le présent exemple sont les niveaux allant de 0 à 3 inclusivement. Selon diverses variantes de réalisation, les niveaux considérés sont plus ou moins nombreux, en fonction des résultats recherchés et du niveau de couverture souhaité.

Par ailleurs, les tronçons doivent être d'une longueur continue (sans interruption par un réseau de niveau d'importance significative) supérieure à un seuil donné. Ce seuil peut être fixe, par exemple de 350 m et de préférence supérieure à 500 m. Il peut également être paramétrable, par exemple en fonction du type de véhicule, car on sait par exemple qu'il faut une distance nettement supérieure pour un poids lourd chargé que pour une voiture puissante pour effectuer un dépassement. Selon un autre exemple, le seuil est paramétrable en fonction d'une distance fournie par l'utilisateur.

On ne retient enfin que les tronçons possédant une vitesse maximale autorisée plus élevée que celle applicable par défaut, aux routes ordinaires. En France cette vitesse devrait être supérieure à 90 km/h : le plus souvent, elle est de 110 km/h, puisque la limite de 130km/h est réservée aux autoroutes.

Tous les tronçons routiers sont regroupés par niveau de réseau et fusionnés géométriquement en des ensembles homogènes sur le plan de la limitation de vitesse. Les seules extrémités non fusionnées sont celles :

-pour lesquelles les tronçons de part et d'autre ne comportent pas la même limitation de vitesse ;

-qui comportent au moins 3 tronçons : il s'agit des points de dédoublement de chaussée (à cet endroit la route passe de simple à double chaussée ou inversement) ;

-des entrées/sorties sur les routes à double-chaussée ;

-des carrefours à niveau (c'est-à-dire sans échangeur) éventuels : en France ce cas est rarissime car une limitation ponctuelle de vitesse précède les intersections à niveau, lesquelles ne peuvent être franchies qu'à la vitesse des routes ordinaires donnant lieu à l'interruption ponctuelle de la zone de dépassement. Un exemple de ce cas pour la route N4 en France est présenté plus loin dans la description.

Les ensembles homogènes résultants constituent les éventuelles zones de dépassement (un ensemble correspond à une zone de dépassement), sous réserve des conditions relatives à la vitesse maximale autorisée et à la longueur minimum d'un tel ensemble. Les extrémités non fusionnées constituent des interruptions des zones de dépassement.

Les données résultantes sont avantageusement conservées pour traitement ultérieur, tel que décrit ultérieurement. Les données sauvegardées peuvent intégrer les portions correspondant aux de zones de dépassements soit sous la forme d'attributs rattachés aux tronçons correspondant, soit en constituant de nouveaux objets, désignés ici « objet zone de dépassement ». Un tel objet pourrait par exemple être conservé de la façon suivante :

Exemple d'un objet ZONE_DEPASSEMENT:

| | | |
|---|---|---|
| ID_ZONE_DEPASSEMENT | NUMBER(9) | PK / compteur |
| REF_PAYS | VARCHAR2(3) | du groupe de tronçons |
| REF_PART | VARCHAR2(3) | du groupe de tronçons |
| REF_NIVEAU_CONNEXITE | NUMBER(1) | du groupe de tronçons |
| LIMITATION_VITESSE | NUMBER(3) | du groupe de tronçons |
| LONGUEUR | NUMBER() | du groupe de tronçons |
| GEOM | SDO_GEOMETRY | du groupe de tronçons |

La pertinence des zones déterminées est fortement dépendante de la qualité des données correspondant aux limitations de vitesse puisqu'il s'agit là d'un des critères essentiels de la constitution du réseau examiné. Or, il existe des cas où les données du système numérique et les indications présentes sur les panneaux routiers ne correspondent pas. Dans de tels cas, si la limitation de vitesse ponctuelle est surévaluée (valeur plus grande dans la base de données que celle effectivement autorisée sur le terrain) : rien ne dit que les tronçons ainsi renseignés comportent effectivement au moins deux files de circulations et permettent les manoeuvres de dépassement. La zone de dépassement indiquée risque de ne pas être utilisable pour une telle manoeuvre. Cela pourra constituer une mauvaise surprise pour le conducteur. Afin d'atténuer cet effet de mauvaise surprise, la limitation de vitesse n'est pas le seul critère retenu pour les tronçons routiers constituant les zones. Les tronçons routiers ne portant pas de nom de route, mais seulement un nom de rue, et présentant des numéros à leurs extrémités, sont éliminés des candidats potentiels à la constitution des zones de dépassement car la probabilité qu'ils répondent effectivement au critère de vitesse requis est très faible.

Si par contre la limitation de vitesse ponctuelle est sous-évaluée (valeur plus petite dans la base de données que celle effectivement autorisée sur le terrain) : la zone de dépassement ne sera pas signalée. Cela pourra constituer une agréable surprise pour le conducteur. Par exemple, sur la N4, à la hauteur de Sommesous, la double chaussée n'est pas retenue comme une zone de dépassement car la limitation de vitesse figurant dans les données est de 90km/h (contre 110km/h autorisés sur le terrain). En revanche, une zone a été identifiée au droit de Haussimont, quelques kilomètres plus à l'Ouest (zone de création plus ancienne) où la limitation de vitesse figurant dans les données est correcte (110km/h). En conséquence, en provenance de l'Ouest, le début de la zone de dépassement sera correctement indiqué mais sa longueur sera sous-évaluée. En provenance de l'Est, l'usager circulera sur la zone de dépassement bien avant d'avoir une indication de la proximité de la seule partie identifiée.

La principale utilisation des données obtenues de zones de dépassement concernent les procédés et systèmes de guidage pour véhicule. En effet, lorsque l'utilisateur circule dans une zone géographique inconnue ou non familière, il ne connaît pas à l'avance la présence des éventuelles zones de dépassement à venir, ni la distance à laquelle une éventuelle zone se situe. En disposant des données et/ou attributs relatifs aux zones de dépassement, un procédé et un système de guidage peuvent effectuer les calculs nécessaires pour informer le conducteur en temps réel au sujet des zones à venir et/ou en cours.

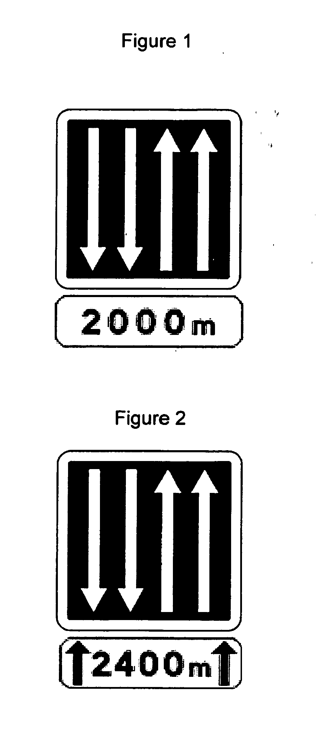

Par exemple, une telle information peut concerner la distance entre la position actuelle du véhicule de l'utilisateur et la prochaine zone de dépassement à venir. Cette fonction complète ou remplace celle remplie par le panneau indicateur C29a en France (voir figure 1), complété par le panonceau de distance M1 que l'on trouve quelques kilomètres en amont de la zone (dans l'exemple illustré 2000m avant). Cette indication nécessite de connaître, pour la partie aval (non encore parcourue) de l'itinéraire suivi, les zones de dépassement potentielles. Il s'agit donc d'une information dynamique car elle est directement liée à l'itinéraire poursuivi d'une part, et à la position du véhicule d'autre part. Cette indication implique par ailleurs l'utilisation de données statiques, lesquelles sont le résultat du traitement de données objet de l'invention.

Pour pouvoir réaliser cette fonction, le dispositif de guidage ou système de navigation dispose d'un accès aux données « enrichies » comprenant les données et attributs relatifs aux zones de dépassement, soit pour un itinéraire donné, soit pour une zone géographique donnée, cette zone pouvant être réduite (quartier, arrondissement, ville, etc) ou plus grande (département, région, province, pays, groupe de pays ou continent, etc).

Dans le cas où l'utilisateur utilise un système de navigation en mode guidé (pour suivre un itinéraire donné), le dispositif doit pouvoir déterminer, à l'aide d'un système de positionnement ou de géolocalisation, la position en temps réel du véhicule. Il doit pouvoir faire correspondre cette position à un point PA de Position Actuelle sur l'itinéraire prévu. Il doit enfin pouvoir rechercher et identifier dans les données enrichies la prochaine zone de dépassement présente sur ledit itinéraire par rapport au point PA de Position Actuelle. Dans le cas où une zone de dépassement à venir est détectée, il reste à évaluer la distance entre le point PA et la prochaine zone de dépassement, de façon à fournir à l'usager une indication correspondante sur la zone de dépassement à venir, comme par exemple une indication visuelle ou sonore informant l'utilisateur du nombre de km et/ou le temps restant avant d'atteindre la prochaine zone de dépassement.

Dans le cas où l'utilisateur utilise un système de guidage ou de navigation en mode de navigation libre, c'est-à-dire sans suivre un itinéraire préétabli, afin de fournir une indication de la prochaine zone de dépassement éventuelle présente le long d'une route, il est nécessaire de détecter, à l'aide d'un système de positionnement, la position en temps réel du véhicule et son sens de déplacement. Il faut ensuite pouvoir faire correspondre cette position à un point PA de Position Actuelle sur la route suivie. Il faut ensuite rechercher dans les données enrichies et identifier la prochaine zone éventuelle de dépassement présente sur ladite route par rapport à ce point de Position Actuelle en fonction du sens de déplacement qui a été déterminé. En cas de détection d'une zone de dépassement à venir, il reste à évaluer la distance entre le point PA et la prochaine zone de dépassement, afin de pouvoir fournir à l'usager une information correspondante sur la zone de dépassement à venir, comme par exemple une indication visuelle ou sonore informant l'utilisateur du nombre de km et/ou du temps restant avant d'atteindre la prochaine zone de dépassement.

Lorsque le véhicule circule dans une zone de dépassement, l'information peut concerner la distance restante et/ou le temps restant avant la fin de la zone. Une alerte peut même être donnée dans les cas où le véhicule approche de la fin d'une zone de dépassement.

Cette fonction complète ou remplace celle remplie par le panneau C29a complété par le panonceau d'étendue M2 que l'on trouve à l'entrée de la zone de dépassement. La différence fondamentale réside dans le fait que le dispositif de guidage est en mesure de fournir à l'utilisateur une information en temps réel et éventuellement de façon continue.

Cette indication nécessite de connaître la longueur restant à parcourir sur la zone de dépassement en cours, compte tenu de l'itinéraire suivi. Il s'agit donc d'une information dynamique, celle-ci étant directement liée à l'itinéraire poursuivi d'une part, et à la position du véhicule d'autre part. Cette indication nécessite l'utilisation des données statiques concernant les zones de dépassement, lesquelles sont le résultat du traitement objet de l'invention.

Dans le cas où l'utilisateur utilise un système de guidage en mode guidé, c'est-à-dire en suivant un itinéraire préétabli, afin de fournir une indication de la distance restante avant la fin d'une zone de dépassement dans laquelle un véhicule se déplace, il est nécessaire déterminer, à l'aide d'un système de positionnement, la position en temps réel du véhicule. Il faut ensuite faire correspondre cette position à un point PA de Position Actuelle sur l'itinéraire prévu, puis vérifier si le point PA se situe dans une zone de dépassement connue dans la base de données enrichie.

Pour toute condition de roulage dans une zone de dépassement, il faut évaluer la distance restante entre le point PA et la fin de ladite zone de dépassement en fonction de l'itinéraire prévu afin de pouvoir fournir à l'usager une information correspondante sur la fin éventuelle de ladite zone de dépassement.

Dans le cas où l'utilisateur utilise un système de guidage en mode de navigation libre, c'est-à-dire sans suivre un itinéraire préétabli, afin de fournir une indication de la distance restante avant la fin d'une zone de dépassement dans laquelle un véhicule se déplace, il est nécessaire de détecter, à l'aide d'un système de positionnement, la position en temps réel du véhicule et son sens de déplacement. Il faut ensuite faire correspondre cette position à un point PA de Position Actuelle sur la route. Il faut vérifier si le point PA se situe dans une zone de dépassement connue dans la base de données enrichie.

Pour toute condition de roulage dans une zone de dépassement, il faut évaluer la distance restante entre le point PA et soit la fin de ladite zone de dépassement, soit la première bifurcation éventuelle rencontrée sur le réseau considéré en fonction du sens de déplacement. Avec ces données, il est alors possible de fournir à l'usager une information correspondante sur la fin ou sur une interruption éventuelle de ladite zone de dépassement.

L'information fournie à l'usager peut consister en une grandeur physique correspondant soit à la distance et/ou au temps restant à parcourir avant d'atteindre une zone de dépassement, ou la distance et/ou le temps restant à l'intérieur d'une telle zone, soit en une alerte pour prévenir l'usager que la fin d'une zone de dépassement est imminente.

Tel que préalablement mentionné, l'invention concerne également un dispositif de guidage pour véhicule routier susceptible d'effectuer les calculs et opérations préalablement décrites.

De façon classique, un tel dispositif permet de fournir à un utilisateur des informations visuelles de guidage le long d'un itinéraire donné entre un point de départ D et un point d'arrivée A comportant une pluralité de points d'instruction PI auxquelles sont associées des instructions de guidage. Egalement de manière classique, un tel type de dispositif comporte au moins un processeur, susceptible de calculer au moins une portion d'itinéraire, et des instructions de mise en oeuvre. Le dispositif peut comporter un moyen de géolocalisation ou être relié à un tel moyen, permettant de fournir en temps réel des informations sur la position du véhicule à guider le long dudit itinéraire.

Il comporte ou est relié à un moyen d'affichage, permettant de fournir une représentation visuelle d'au moins une portion d'itinéraire ainsi que ladite position du véhicule guidé le long de cet itinéraire.

Il comporte ou est relié à un dispositif de stockage ou mémoire offrant un accès aux données « enrichies » comprenant les données et attributs relatifs aux zones de dépassement, soit pour un itinéraire donné, soit pour une zone géographique donnée, cette zone pouvant être réduite (quartier, arrondissement, ville, etc) ou plus grande (département, région, province, pays, groupe de pays ou continent, etc).

Dans le cadre de l'invention, le processeur et les instructions de mise en oeuvre permettent de fournir à l'utilisateur des indications sur au moins une éventuelle zone de dépassement, tel qu'évoqué dans les différents cas de figure préalablement décrits, et correspondant soit à une distance à parcourir avant d'atteindre une zone de dépassement, soit à une distance à parcourir avant de quitter une zone de dépassement.

## Revendications

1. Procédé de détermination de zones de dépassement pour système de réseau routier numérique stocké sur un support mémoire et comportant une pluralité d'éléments de réseau tels que des noeuds et/ou de tronçons et d'indications de positionnement de ces noeuds et/ou tronçons, lesdits éléments étant susceptibles d'une part d'être agencés dans une reconstitution d'un réseau routier de façon à former des portions de routes et des carrefours, et d'autre part de permettre de déterminer, à l'aide de moyens de traitement de données, au moins un itinéraire potentiel, susceptible de relier un point de départ D, et un point d'arrivée A, lesdits éléments de réseau comportant par ailleurs les attributs permettant de classer les tronçons au moins en fonction des critères suivants :
• situation en milieu urbain ou rural ;
• longueur du tronçon ;
• type de route :
a. autoroute ;
b. voie rapide ;
c. voie à double-chaussée ordinaire ;
d. voie ordinaire à simple chaussée ;
e. bretelles ;
f. ronds-points ;
• vitesse maximum légale autorisée sur le tronçon ;
• niveau d'importance du tronçon ;
**caractérisé en ce que** au moins une portion desdits éléments de réseau sont traités numériquement à l'aide de moyens de traitement de données, ledit traitement consistant à passer en revue chacun des tronçons et des attributs correspondants afin d'identifier chaque tronçon correspondant à la fois à :
a. une zone de route à double chaussée ordinaire;
b. située en environnement rural ;
c. d'une longueur continue supérieure à un seuil donné;
d. possédant une vitesse maximale autorisée plus élevée que celle applicable par défaut aux routes ordinaires ;
e. avec un niveau d'importance suffisant;
f. lesdits tronçons n'étant par ailleurs pas sur une autoroute ou sur une voie rapide ;
de façon à affecter un attribut de zone de dépassement à chaque tronçon correspondant à l'ensemble de ces critères.

2. Procédé de détermination de zones de dépassement, pour système de réseau routier numérique selon la revendication 1, dans lequel lesdits éléments de réseau comportent par ailleurs les attributs additionnels suivants permettant de classer les tronçons:
• nom de route ;
• nom de rue ;
• numéros de début / fin ;
et dans lequel pour tout tronçon routier portant seulement un nom de rue et présentant des numéros d'adresses à ses extrémités, aucun attribut de zone de dépassement n'est affecté.

3. Procédé de détermination de zones de dépassement, pour système de réseau routier numérique selon l'une des revendications 1 ou 2, dans lequel l'ensemble des éléments traités comprend au moins les tronçons compris dans un itinéraire donné.

4. Procédé de détermination de zones de dépassement, pour système de réseau routier numérique selon l'une des revendications 1 à 3, dans lequel l'ensemble des éléments traités comprend une zone géographique donnée.

5. Procédé de détermination de zones de dépassement, pour système de réseau routier numérique selon l'une des revendications précédentes, dans lequel un attribut de zone de dépassement n'est pas affecté à tout tronçon comportant un tronçon sécant entrant ou à double sens dont le niveau d'importance est sensiblement égal ou supérieur à celui du tronçon analysé si la distance qui précède l'intersection ne vérifie pas la condition d'éligibilité.

6. Logiciel comprenant des éléments de code programmés pour la mise en oeuvre du procédé selon l'une des revendications 1 à 5, lorsque ledit logiciel est chargé dans un système informatique et exécuté par ledit système informatique.

7. Logiciel selon la revendication 6, sous forme de produit enregistré sur un support lisible par un système informatique, comprenant des éléments de code programmés.

8. Dispositif de guidage pour véhicule routier, permettant de fournir à un utilisateur des informations visuelles de guidage le long d'un itinéraire donné entre un point de départ (D) et un point d'arrivée (A) comportant une pluralité de points d'instruction (PI) auxquels sont associées des instructions de guidage, ledit dispositif comportant au moins un processeur, susceptible de calculer au moins une portion d'itinéraire, des instructions de mise en oeuvre, un moyen de géolocalisation, permettant de fournir en temps réel des informations sur la position du véhicule à guider le long dudit itinéraire, un accès à un moyen d'affichage, permettant de fournir une représentation visuelle d'au moins une portion d'itinéraire ainsi que ladite position du véhicule guidé le long de cet itinéraire, un accès à une base de données contenant une pluralité d'éléments de réseau représentatifs d'un réseau routier et les données relatives aux zones de dépassement de ce réseau au moins pour une zone géographique donnée, lesdites données de dépassement ayant été préalablement obtenues par le procédé selon l'une des revendications 1 à 5, et dans lequel ledit processeur et les instructions de mise en oeuvre permettent de fournir à l'utilisateur des indications sur au moins une éventuelle zone de dépassement.

## Claims

1. Method for determining passing zones for a digital road network system stored on a memory medium and comprising a plurality of network elements such as nodes and/or sections and of indications of positioning of these nodes and/or sections, the said elements being capable on the one hand of being arranged in a reconstitution of a road network so as to form portions of roads and of the junctions, and on the other hand of making it possible to determine, with the aid of data processing means, at least one potential itinerary, capable of connecting a point of departure D, and a point of arrival A, the said network elements moreover comprising the attributes making it possible to classify the sections at least as a function of the following criteria:
• situation in urban or rural environment;
• length of the section;
• type of road:
a. motorway;
b. expressway;
c. ordinary two-lane way;
d. ordinary single-lane way;
e. slip roads;
f. roundabouts;
• maximum legal speed allowed on the section;
• level of importance of the section;
**characterized in that** at least one portion of the said network elements are processed digitally with the aid of data processing means, the said processing consisting in reviewing each of the sections and of the corresponding attributes in order to identify each section corresponding simultaneously to:
a. a zone with an ordinary two-lane road;
b. situated in a rural environment;
c. of a continuous length greater than a given threshold;
d. having a maximum authorized speed higher than that applicable by default to ordinary roads;
e. with a sufficient level of importance;
f. the said sections moreover not being on a motorway or on an expressway;
so as to assign a passing zone attribute to each section corresponding to all of these criteria.

2. Method for determining passing zones, for a digital road network system according to Claim 1, in which the said network elements moreover comprise the following additional attributes making it possible to classify the sections:
• road name;
• street name;
• start/end numbers;
and in which, for any road section bearing only a street name and having address numbers at its ends, no passing zone attribute is assigned.

3. Method for determining passing zones, for a digital road network system according to either of Claims 1 and 2, in which all of the processed elements comprise at least the sections included in a given itinerary.

4. Method for determining passing zones, for a digital road network system according to one of Claims 1 to 3, in which all of the processed elements comprise a given geographic zone.

5. Method for determining passing zones, for a digital road network system according to one of the preceding claims, in which a passing zone attribute is not assigned to any section comprising an entering intersecting section or a two-way section the level of importance of which is substantially equal to or greater than that of the section analysed if the distance preceding the intersection does not verify the condition of eligibility.

6. Software comprising elements of code programmed for the application of the method according to one of Claims 1 to 5, when the said software is loaded into a computer system and executed by the said computer system.

7. Software according to Claim 6, in the form of a product saved onto a medium that can be read by a computer system, comprising programmed elements of code.

8. Guidance device for a road vehicle, making it possible to provide a user with visual information for guidance along a given itinerary between a point of departure (D) and a point of arrival (A) comprising a plurality of instruction points (PI) with which guidance instructions are associated, the said device comprising at least one processer capable of calculating at least one portion of itinerary, instructions for use, a means of geolocation, making it possible to provide in real time information on the position of the vehicle to be guided along the said itinerary, access to a display means, making it possible to provide a visual representation of at least one portion of itinerary and the said position of the vehicle guided along this itinerary, access to a database containing a plurality of network elements representative of a road network and the data relating to the passing zones of this network at least for a given geographic zone, the said passing data having been previously obtained by the method according to one of Claims 1 to 5, and in which the said processer and the instructions for use make it possible to provide the user with indications on at least one possible passing zone.

## Patentansprüche

1. Verfahren zur Bestimmung von Überholzonen für ein digitales Straßennetzsystem, das in einem Speicherträger gespeichert ist und mehrere Netzelemente, wie Knoten und/oder Streckenabschnitte, und Positionsanzeigen dieser Knoten und/oder Streckenabschnitte aufweist, wobei die Elemente einerseits in einer Rekonstruktion eines Straßennetzes angeordnet sein können, um Landstraßenabschnitte und Kreuzungen zu bilden, und es andererseits ermöglichen können, mit Hilfe von Datenverarbeitungseinrichtungen mindestens eine potentielle Wegstrecke zu bestimmen, die einen Ausgangspunkt D und einen Ankunftspunkt A verbinden kann, wobei die Netzelemente außerdem die Attribute aufweisen, die es ermöglichen, die Streckenabschnitte zumindest in Abhängigkeit von den folgenden Kriterien einzuordnen:
• Situation in städtischer oder ländlicher Umgebung,
• Länge des Streckenabschnitts;
• Art der Landstraße:
a. Autobahn;
b. Schnellstraße;
c. gewöhnliche zweispurige Fahrbahn;
d. gewöhnliche einspurige Fahrbahn;
e. Zubringer;
f. Verkehrskreisel;
• auf dem Streckenabschnitt zulässige Höchstgeschwindigkeit;
• Bedeutungsgrad des Streckenabschnitts;
**dadurch gekennzeichnet, dass** mindestens ein Teil der Netzelemente digital mit Hilfe von Datenverarbeitungseinrichtungen verarbeitet werden, wobei die Verarbeitung darin besteht, jeden der Streckenabschnitte und jedes der entsprechenden Attribute zu inspizieren, um jeden Streckenabschnitt zu identifizieren, der gleichzeitig entspricht:
a. einer Zone einer gewöhnlichen zweispurigen Landstraße;
b. die sich in einer ländlichen Umgebung befindet;
c. mit einer durchgehenden Länge größer als ein gegebener Schwellwert;
d. mit einer höheren erlaubten Höchstgeschwindigkeit als diejenige, die standardmäßig für gewöhnliche Landstraßen anwendbar ist;
e. mit einem ausreichenden Bedeutungsgrad;
f. wobei die Streckenabschnitte sich außerdem nicht auf einer Autobahn oder auf einer Schnellstraße befinden;
um jedem der Einheit dieser Kriterien entsprechenden Streckenabschnitt ein Überholzonenattribut zuzuweisen.

2. Verfahren zur Bestimmung von Überholzonen für ein digitales Straßennetzsystem nach Anspruch 1, bei dem die Netzelemente außerdem die folgenden zusätzlichen Attribute aufweisen, die es ermöglichen, die Streckenabschnitte einzuordnen:
• Name der Landstraße;
• Name der Straße;
• Anfangs-/Endnummern;
und bei dem für jeden Streckenabschnitt, der nur einem Straßennamen trägt und Adressennummern an seinen Enden aufweist, kein Überholzonenattribut zugewiesen wird.

3. Verfahren zur Bestimmung von Überholzonen für ein digitales Straßennetzsystem nach einem der Ansprüche 1 oder 2, bei dem die Einheit der verarbeiteten Elemente mindestens die auf einer gegebenen Wegstrecke enthaltenen Streckenabschnitte enthält.

4. Verfahren zur Bestimmung von Überholzonen für ein digitales Straßennetzsystem nach einem der Ansprüche 1 bis 3, bei dem die Einheit der verarbeiteten Elemente eine gegebene geographische Zone enthält.

5. Verfahren zur Bestimmung von Überholzonen für ein digitales Straßennetzsystem nach einem der vorhergehenden Ansprüche, bei dem jedem Streckenabschnitt kein Überholzonenattribut zugewiesen wird, der einen einmündenden schneidenden Streckenabschnitt oder einen Zweirichtungsstreckenabschnitt aufweist, dessen Bedeutungsgrad im Wesentlichen gleich dem oder höher als der des analysierten Streckenabschnitts ist, wenn die Entfernung vor der Kreuzung nicht die Wählbarkeitsbedingung erfüllt.

6. Software, die programmierte Codeelemente zur Durchführung des Verfahrens nach einem der Ansprüche 1 bis 5 enthält, wenn die Software in ein EDV-System geladen und von diesem Informatiksystem ausgeführt wird.

7. Software nach Anspruch 6, in Form eines auf einem von einem EDV-System lesbaren Träger gespeicherten Produkts, die programmierte Codeelemente enthält.

8. Leitvorrichtung für ein Straßenfahrzeug, die es ermöglicht, einem Nutzer visuelle Leitinformationen entlang einer gegebenen Wegstrecke zwischen einem Ausgangspunkt (D) und einem Ankunftspunkt (A) zu liefern, die mehrere Anweisungspunkte (PI) aufweist, denen Leitanweisungen zugeordnet sind, wobei die Vorrichtung mindestens einen Prozessor, der mindestens einen Wegstreckenabschnitt berechnen kann, Durchführungsanweisungen, eine Geolokalisierungseinrichtung, die es ermöglicht, in Echtzeit Informationen über die Position des entlang der Wegstrecke zu leitenden Fahrzeugs zu liefern, einen Zugang zu einer Anzeigeeinrichtung, die es ermöglicht, eine visuelle Darstellung mindestens eines Wegstreckenabschnitts sowie die Position des entlang dieser Wegstrecke geleiteten Fahrzeugs zu liefern, und einen Zugang zu einer Datenbank aufweist, die mehrere Netzelemente, die für ein Straßennetz repräsentativ sind, und die Daten bezüglich der Überholzonen dieses Netzes zumindest für eine gegebene geographische Zone enthält, wobei die Überholdaten vorher durch das Verfahren nach einem der Ansprüche 1 bis 5 erhalten wurden, und bei der der Prozessor und die Durchführungsanweisungen es ermöglichen, dem Nutzer Angaben über mindestens eine mögliche Überholzone zu liefern.
